# Europäisches Patentamt

## European Patent Office

## Office européen des brevets

(11) Publication number: **0 102 826**
**B1**

(12) **EUROPEAN PATENT SPECIFICATION**

(45) Date of publication of patent specification: **23.11.88**

(21) Application number: **83305021.4**

(22) Date of filing: **31.08.83**

(51) Int. Cl.⁴: **G 11 B 5/58,** G 11 B 15/18,
G 11 B 15/60 // G11B15/46

(54) **Still image reproducing apparatus.**

(30) Priority: **31.08.82 JP 151206/82**

(43) Date of publication of application:
**14.03.84 Bulletin 84/11**

㊸ Publication of the grant of the patent:
**23.11.88 Bulletin 88/47**

(84) Designated Contracting States:
**AT DE FR GB NL**

(56) References cited:
EP-A-0 087 811
EP-A-0 089 816
EP-A-0 092 289
EP-A-0 096 406
EP-A-0 100 546
DE-A-3 139 810
FR-A-2 438 888
GB-A-2 013 939
GB-A-2 086 171

GRUNDIG TECHNISCHE INFORMATIONEN,
vol. 27, no. 6, 1980, pages 281-292,
Regensburg, DE; W. KORNHAAS: "Grundig
Videorecorder 2x4 PLUS"

(73) Proprietor: **SONY CORPORATION**
**7-35 Kitashinagawa 6-Chome Shinagawa-ku**
**Tokyo 141 (JP)**

(72) Inventor: **Nemoto, Shoji**
**2-1 Daiichi Sakaeya-so 1-7-18, Deiki**
**Kanazawa-ku Yokohama-shi Kanagawa-ken (JP)**
Inventor: **Yoshioka, Hiroshi**
**3-301 Toutatezama-hitsu 4-3011-18, Iriya**
**Zama-shi Kanagawa-ken (JP)**

(74) Representative: **Ayers, Martyn Lewis Stanley**
**et al**
**J.A. KEMP & CO. 14 South Square Gray's Inn**
**London, WC1R 5EU (GB)**

(56) References cited:

**ELEKTOR, vol. 10, no. 5, October 1979, pages**
**10-01 - 10-04, Canterbury, GB; "New home-**
**video standard from Philips"**

**FUNKSCHAU, vol. 51, no. 16, August 1979,**
**pages 72-76, Munich, DE; "Video 2000 - ein**
**neues Bildaufzeichnungssystem"**

**GRUNDIG TECHNISCHE INFORMATIONEN,**
**vol. 27, no. 3, 1980, pages 111-120, Furth, DE;**
**W. KORNHAAS: "Das Band-, Kopfservo- und**
**Spurnachführungssystem (DTF) des Video 2x4"**

Courier Press, Leamington Spa, England.

# Description

The present invention relates to a still image reproducing apparatus. More particularly, the present invention relates to a video recording apparatus having an automatic track following system (to be referred to as the ATF system hereinafter) wherein a plurality of pilot signals having different frequencies are sequentially recorded together with information, and the reproducing head is tracked along the respective tracks utilizing the pilot signals reproduced together with the information by the reproducing head.

In a conventional video tape recorder (hereinafter referred to as a VTR) one field of video information is recorded in a sequence of parallel tracks recorded obliquely across a magnetic tape by two rotary heads which rotate at a given speed relative to the magnetic tape as a recording medium. In the reproduction mode, the magnetic tape is driven at the same speed as that used in the recording mode, so that the video head correctly reproduces the video signals recorded on the respective video tracks.

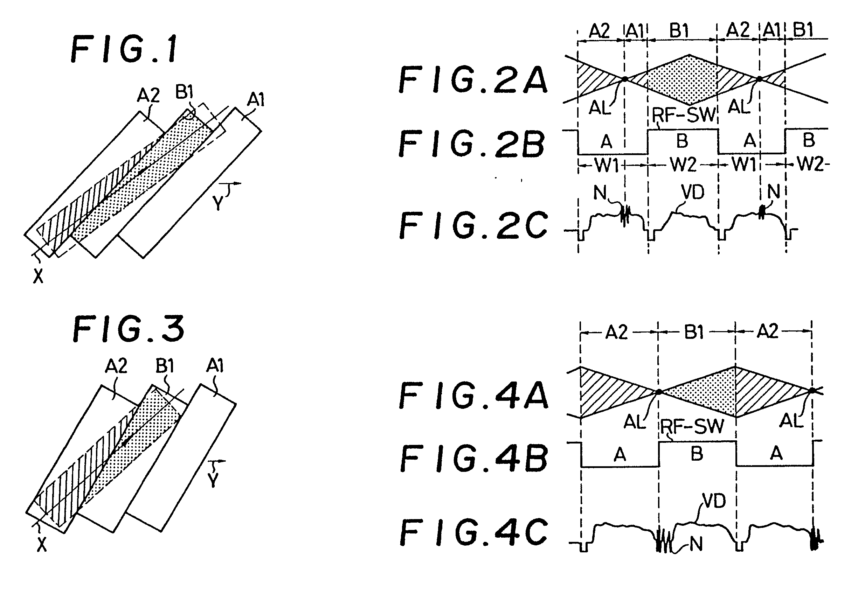

In order to obtain still image, frame advance images or reverse frame advance images, the tape is stopped so that two video heads A and B having different azimuth angles repetitively scan the corresponding tracks. However, when the tape is actually stopped at a desired position, the scanning track of the head is often as indicated by the broken line in Fig. 1 of the accompanying drawings. In this condition, the heads scan in the direction X, so as to cross tracks A2 and A1 corresponding to the video head A and a track B1 corresponding to the other video head B. When the head changes over from the track A2 to A1 in head A scanning period W1, there is a dead point AL at which the reproduced video signal cannot be obtained (Fig. 2A). For this reason, noise N is included in the signal of one field of a reproduced video signal VD (Fig. 2C). This is because video signals are recorded in different azimuths in adjacent tracks so as to prevent crosstalk therebetween. If no measure against this is taken a noise bar is generated in frame advance images and in reverse frame advance images. A solution to this problem has therefore been desired.

A first measure to correct this problem, described in Grundig Technische Informationen, Vol. 27, No. 3, pages 111—120, is to correct the positions of the heads A and B during field scanning. According to this first measure, the video heads are mounted on a rotary drum through position control elements such as bimorph elements, so that the head A correctly scans the tracks A1 and A2, and the head B scans the track B1. With this measure, a still image of good quality can be obtained. However, the configuration surrounding the heads A and B becomes complex, resulting in high manufacturing cost.

A second measure is to control the timing of stopping the tape such that the scanning track of the head equally overlies two adjacent tracks, as shown in Fig. 3. When this measure is taken, the point AL (Fig. 4A) at which the reproduced video signal cannot be obtained is shifted to the switching point of the head change-over pulse RF—SW (Fig. 4B) or to a point close thereto. This time point corresponds to a vertical blanking period or the vicinity thereof of the demodulated or reproduced video signal VD (Fig. 4C). Accordingly, even if noise N is generated, such noise is hidden either above or below the actual image frame.

Conventionally, this second measure has been adopted in a VTR of the CTL tracking type, in which a control pulse (CTL pulse) corresponding to each track is recorded in a longitudinal track on the tape, and tracking control is performed using this CTL pulse. An apparatus for a VTR having an ATF system has been proposed in EP—A—0 092 289; it forms part of the state of the art by virtue of Art. 54(3) EPC.

The present invention has been made in consideration of this and seeks, in one aspect, to provide a still image reproducing apparatus, particularly a video recording apparatus having an ATF system, which is capable of stopping a recording medium at a position such that noise bars may not appear on the screen.

In order to achieve the above object of the present invention, when a recording medium is stopped utilizing pilot signals recorded on two adjacent tracks, the recording medium is driven to a position at which the areas of overlap between the reproducing head and two successive tracks become equal to each other, and then the recording medium is stopped.

Thus according to the present invention, there is provided an apparatus for reproducing a still picture signal by scanning with reproducing heads on video tape on which recorded tracks are sequentially formed, wherein each of the recorded tracks contains a pilot signal, the frequencies of the respective pilot signals sequentially changing from track to track in a predetermined cyclic order, the apparatus comprising means for generating reference pilot signals having frequencies corresponding to the frequencies of said pilot signal to be reproduced from said recorded tracks, means for generating a control signal indicative of positions of said tape relative to said reproducing heads by subtracting the frequency of a reference pilot signal from the frequency of the pilot signal reproduced by said reproducing heads, and means for controlling the positions of said tape relative to said heads in response to said control signal, characterised in that for use in a mode of operation in which the heads scan across two adjacent tracks to reproduce a still-picture signal, said reference pilot signal generating means is adapted to supply to said control signal generating means a reference pilot signal whose frequency alternates for successive scans between first and second frequencies which are the same as respective ones of the pilot signals in the adjacent tracks being scanned, the frequency being changed between scans and held constant for the duration of each scan, in order to search for a proper tape position for still image reproduction.

The invention will be further described by way of non-limitative example with reference to the accompanying drawings, in which:—

Figures 1 and 2 are respectively a schematic view and a waveform chart for explaining head scanning when the tape is stopped at some position on the tape;

Figures 3 and 4 are a schematic view and a waveform chart for explaining head scanning when the tape is stopped so as to expel noise bars into a vertical scanning period or the vicinity thereof;

Figure 5 is a block diagram showing the principle of a tracking control device of the ATF system;

Figure 6 is a schematic view showing a track pattern recorded on the tape;

Figure 7 shows timing charts of signals at various parts in Figure 5;

Figure 8 is a block diagram showing an embodiment of a still image reproducing apparatus according to the present invention;

Figure 9 shows timing charts for explaining the change-over of the pilot signals;

· Figure 10 is a schematic view showing the head stopped at some position relative to the tape;

Figures 11 and 12 show timing charts of signals at respective parts in Figure 8; and

Figure 13 is a block diagram showing another embodiment of the present invention.

An embodiment will now be described wherein the present invention is applied to a two-head helical scanning VTR having an ATF system.

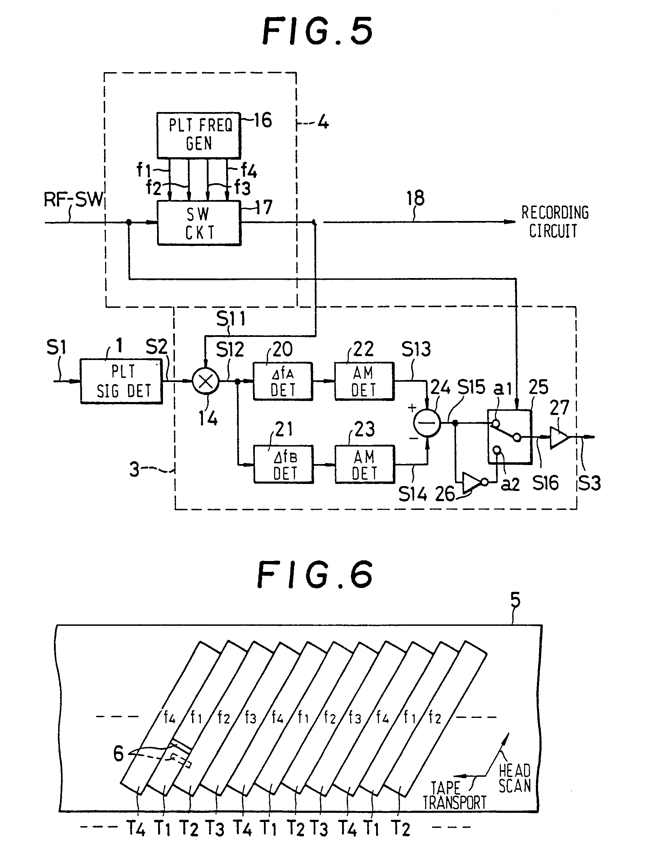

The mode of operation of a tracking control apparatus of the ATF type will now be described with reference to Figs. 5 to 7. In the tracking control apparatus shown in Fig. 5, a reproduction output signal S1 from a reproducing head such as a rotary video head is supplied to a pilot signal detecting circuit 1 comprising a low pass filter. The detection circuit 1 produces as a detected pilot signal S2 a reproduction of a pilot signal recorded on a recording medium, such as a magnetic tape, read by the reproducing head. The detected pilot signal S2 is supplied to an error signal generator 3. The error signal generator 3 produces a tracking error signal S3 under the control of a tracking signal generator 4.

As shown in Fig. 6, a tape 11 has sequentially repetitively formed thereon a plurality of sets of, for example, 4 video tracks T1, T2, T3 and T4 which have four different pilot signals f1, f2, f3 and f4 of different frequencies recorded thereon, respectively, the video tracks extending in mutually close relationship obliquely across the tape 5. In the embodiment, the effective width of a video head which acts as the reproducing head 6 is selected, for example, substantially equal to the width of each of the tracks T1 to T4. As a result, when the reproducing head 6 properly tracks a track which is being currently scanned for reproduction (the track will be hereinafter called the reproduced track), only pilot signals recorded on that track will be reproduced and consequently, the reproduced output will include only a single pilot frequency component therein. On the contrary, if the reproducing head 6 is displaced rightwardly or leftwardly relative to the track, then pilot signals recorded on another adjacent track on the right or left side of the reproduced track will be reproduced additionally and accordingly, the reproduced output will include two pilot frequency components therein.

Frequencies f1 to f4 of the four pilot signals f1 to f4 are selected to be within a frequency band further below the low frequency band (600 to 700 kHz) to which the color components have been converted. The difference in frequency between pilot signals recorded on each of the odd-numbered tracks T1 and T3 of the set of four tracks T1 to T4 and pilot signals on the adjacent track to the right-hand side of the track is selected to be ΔfA while the difference in frequency of pilot signals between each odd-numbered track T1, T3 and pilot signals on another adjacent track to the lefthand side of the track is selected to be ΔfB. Thus, the difference in frequency between pilot signals in each even-numbered track T2, T4 and pilot signals on another adjacent track on the right-hand side is ΔfB while the difference in frequency between the same and pilot signals on the left-hand side is ΔfA.

Accordingly, if signals whose frequency is ΔfA are included as a frequency component of the reproduced pilot signals when the head 6 is reproducing an odd-numbered track T1, T3, then it proves that the head 6 is in a rightwardly displaced position; on the contrary, if signals whose frequency is ΔfB are included, then the head 6 is in a leftwardly displaced position; and if no signal whose frequency is ΔfA or ΔfB is included, it is apparent that proper tracking is maintained.

Similarly, if signals whose frequency is fB are included as a frequency component of the reproduced pilot signals when the head 6 is reproducing an even-numbered track T2, T4, then it proves that the head 6 is in a rightwardly displaced position; on the contrary, if signals whose frequency is ΔfA are included, the head 6 is in a leftwardly displaced position.

In the present embodiment, frequencies f1, f2, f3 and f4 assigned to the first, second, third and fourth tracks T1, T2, T3 and T4, respectively are selected to be f1=102 kHZ; f2=116 kHZ; f3=160 kHZ and f4=146 kHZ, and hence the differences in frequency ΔfA and ΔfB are:

$$\Delta fA = f1 - f2 = f3 - f4 = 14 \text{ kHZ} \qquad (1)$$

$$\Delta fB = f2 - f4 = f1 - f4 = 44 \text{ kHZ} \qquad (2)$$

Reproduced signals S1 obtained from the head 6 and having such contents are applied to a pilot signal detecting circuit 1 constructed as a low pass filter at which pilot signals f1 to f4 are extracted as detected pilot signals S2 from the total reproduced signals S1. The detected pilot signals S2 are fed to a multiplier 14 as a first multiplication input. Reference pilot signals S11 are fed from a tracking signal generator 4 as a second multiplication input to the multiplier 14.

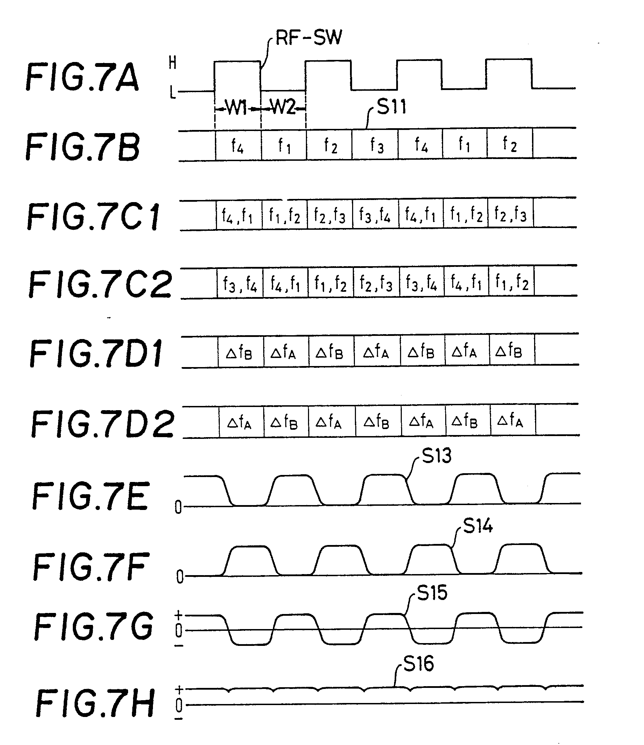

The tracking signal generator 4 includes a pilot frequency generating circuit 16 for generating four different pilot frequency outputs f1 to f4 of the frequencies f1 to f4, respectively, and a switching circuit 17 which receives head change-over pulses RF—SW (Fig. 7A) whose logic level is changed each time two video heads associated with a rotary drum (not shown) are alternately rendered operative for scanning of a tape. It is to be understood that the switching circuit 17 of the present embodiment includes a quaternary counter circuit whose count changes by one each time the level of the head change-over pulses changes. Thus, gate signals corresponding to the first to fourth tracks T1 to T4 are sequentially repetitively provided from the counter circuit. Gates are switched open by the gate signals for the tracks T1 to T4 so that the pilot frequency outputs f1 to f4 of the pilot frequency generating circuit 16 as shown by Fig. 7B are sequentially delivered as reference pilot signals S11.

It is to be noted that pilot frequency outputs f1 to f4 obtained at output terminals of the switching circuit 17 are delivered as pilot signals to a video head over a signal line 18. While the video head scans the first to fourth tracks T1 to T4, pilot signals of corresponding frequencies f1 to f4 are sequentially fed to the video head to record the pilot signals onto individual tracks T1 to T4.

Thus, if detected pilot signals S2 obtained at output terminals of the pilot signal detecting circuit 1 while the video head 6 is scanning the first to fourth tracks T1 to T4, respectively, are multiplied by a reference pilot signal S11 generated in synchronism with the currently reproduced track, then a multiplication output S12 is thereby obtained which includes a component of frequency having a frequency corresponding to the difference between a frequency component included in the detected pilot signals S2 and the frequency of the reference pilot signals S11 where there is a tracking error (in fact, multiplication output S12 includes other signal components such as a sum frequency component). The multiplication output S12 is coupled to first and second difference frequency detecting circuits 20 and 21, respectively. When a signal component of the frequency difference $\Delta fA$ depending upon the equation (1) hereinabove is included in the multiplication output S12, it is extracted by the first difference frequency detecting circuit 20 and is then converted into a direct current by means of an amplitude detector circuit 22 comprising a rectifier circuit to obtain a first error detection signal S13 of a direct current level. Similarly, when a signal component of the frequency difference $\Delta fB$ depending upon the equation (2) hereinabove is included in the multiplication output S12, it is extracted by the second difference frequency detecting circuit 21 and is then converted into a direct current by means of another similar amplitude detector circuit 23 to obtain a second error detection signal S14.

Thus, if the head 6 is displaced rightwardly while it scans the first, second, third and fourth tracks T1, T2, T3 and T4 (that is, the switching circuit 17 outputs reference signals of frequencies f1, f2, f3, f4 at the timings corresponding to tracks T1, T2, T3, T4), the detecting pilot signal S2 obtained from the reproduction output S1 of the head 6 will include therein pilot signals of the frequencies f1 and f2, f2 and f3, f3 and f4, and f4 and f1, respectively, as shown by Fig. 7—C1. Accordingly, a signal will be produced as the multiplication output S12 which sequentially includes therein corresponding difference frequencies $\Delta fA$ (=F1—F2), $\Delta fB$ (=f2—f3), $\Delta fA$ (=f3—f4), and $\Delta fB$ (=f4—f1) as shown by Fig. 7—D1. On the contrary, if the head 5 is in a leftwardly displaced position, the detected pilot signal S2 will sequentially include therein pilot signals of the frequencies f4 and f1, f1 and f2, f2 and f3, and f3 and f4, as shown by Fig. 7—C2. Accordingly, the multiplication output S12 will sequentially include therein the difference frequencies $\Delta fB$ (=f4—f1), $\Delta fA$ (=f1—f2), $\Delta fB$ (=f2—f3), and $\Delta fA$ (=f3—f4), respectively, as shown by Fig. 7—D2.

Thus, first and second error detection signals S13 and S14 having a direct current level which rises from 0 each time the track scanned by the head 6 is changed, as shown by Figs. 7E and 7F (which shows, for example, a rightwardly displaced condition), can be obtained from the amplitude detector circuits 22 and 23, respectively.

The first and second error detection signals S13 and S14 are fed as an adding input and a subtracting input, respectively, to a subtracting circuit 24 which thereby provides a subtraction output S15 that varies alternatingly each time the first and second error detection signals S13 and S14 are produced alternately, as shown by Fig. 7G. The subtraction output S15 is fed directly to a first input terminal a1 of a change-over switch circuit 25 while it is inverted in polarity at an inverter circuit 26 and is then fed to a second input terminal a1 of the change-over switch circuit 25. The change-over switch circuit 25 switches, in response to the head change-over pulses RF—SW applied thereto, to the first input terminal a1 when, for example, the head 6 scans an odd-numbered track T1 or T3; and to the second terminal a2 when the head 6 scans an even-numbered track T2 or T4. Thus, when the head 6 is in a rightwardly displaced position, a positive DC level output S16 as shown by Fig. 7H will be obtained. On the contrary, when the head 6 is in a leftwardly displaced position, its DC level output S16 is in negative polarity. This output is fed as an error signal S3 by way of a DC amplifier 27. If the head 6 is displaced, for example, rightwardly, then a signal component of the frequency difference $\Delta fA$ will appear at the output terminal of the multiplier circuit 14 when the reproduced track is an odd number T1 or T3 and hence an output of the first difference frequency detecting circuit 20 will be fed to the subtracting circuit 24 which thereupon will produce an error signal S17 having a positive DC level since the change-over switch circuit 25 is switched to the first input terminal a1 thereof; on the contrary, when the reproduced track is an even number T2 or T4, a signal component of the frequency difference ΔfB will appear at the output terminal of the multiplier circuit 14 and hence the output from the second difference frequency detecting circuit 21 will be coupled to the subtracting circuit 24 which thereupon will produce a negative output since the change-over switch circuit 25 is switched to the second input terminal a2 thereof. The negative output of the subtracting circuit 24 will be inverted in polarity at the inverter circuit 26 and delivered as an error signal S3 having a positive DC level.

Accordingly, if the error signal S3 is delivered, for example, as a correction signal to a phase servo circuit of a capstan servo system to correct the speed of travel of a tape such that the speed is increased when the output of the subtracting circuit 24 is positive whereas it is decreased when the output is negative, then the displacement between the video head and the reproduced track can be corrected accordingly, thereby realizing appropriate tracking servoing.

In the above description of the embodiment shown in Figs. 5 to 7, the width of the video head 6 is selected to be substantially equal to the track width. However, in practice, the width of the video head is greater than the track width. Accordingly, when the reproducing video head is performing correct tracking, the left and right sides of the head also overlie the tracks to the right and left of the current track from which the signals are being reproduced. However, the error signal components which correspond to rightward or leftward displacement included in the error signal S3 and which are obtained from the pilot signals of these overlying portion have opposite polarities and substantially the same magnitudes. Thus, these error signal components cancel each other, so that the apparatus operates according to the principle of the present invention.

In the apparatus of the configuration shown in Fig. 5, the difference frequencies ΔfA and ΔfB are obtained from the reproduced pilot signal. However, similar effects may be obtained by directly comparing the amplitudes of the pilot signals and obtaining tracking error signals.

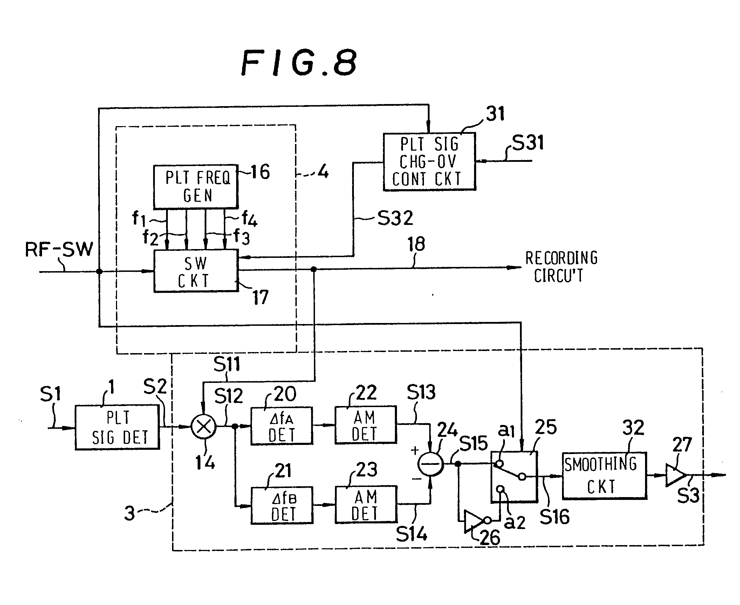

A still image reproducing apparatus embodying the present invention is shown in part in Fig. 8 in which the same reference numerals as used in Fig. 5 denote the same parts. The apparatus shown in Fig. 8 has a pilot signal change-over control circuit 31 associated with a tracking control device as described above. The pilot signal change-over control circuit 31 receives a still image mode designation signal S31 from a separate operation switch, and head change-over pulses RF—SW. The pilot signal change-over control circuit 31 produces a change-over control signal S32. When the contents of the still image mode designation signal S31 designate "frame advance image" or "reverse frame advance image", the change-over control signal S32 sequentially designates four reference pilot signals S11 each having a different pair of frequencies at predetermined intervals to be supplied to the multiplier 14 through the switching circuit 17 in respective half cycles W1 and W2 of the head change-over signal RF—SW. Conversely, when the contents of the still image mode designation signal S31 designate "still image", the pilot signal change-over control circuit 31 produces the change-over control signal S32 designating one of the four reference pilot signals without changing its frequency combination.

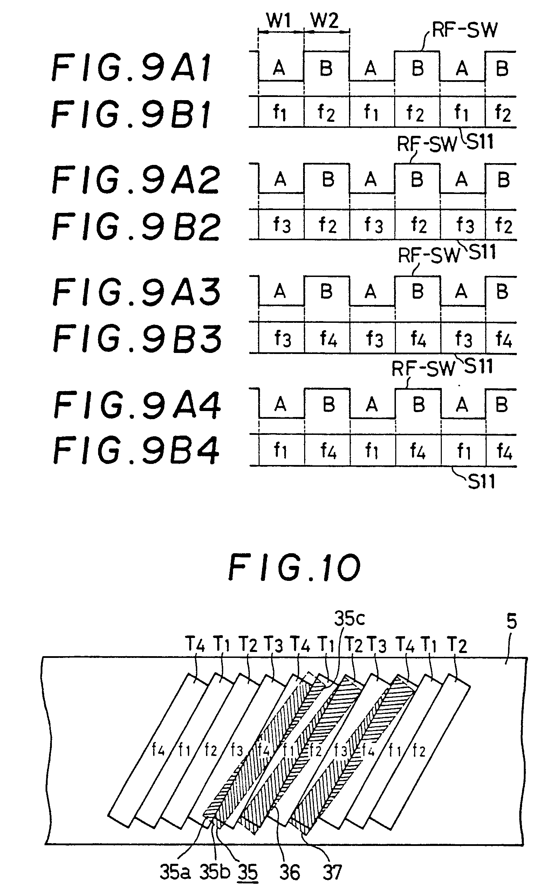

When "frame advance image" is designated, the pilot signal change-over control circuit 31 causes the switching circuit 17 to produce reference pilot signals S11 having frequencies f1 and f2, f3 and f2, f3 and f4, and f1 and f4 in respective half cycles W1 and W2 of a head change-over signal RF—SW (Figure 7A) as first through fourth designation modes, as shown in Figures 9A1 and 9B1, 9A2 and 9B2, 9A3 and 9B3, and 9A4 and 9B4, respectively. On the other hand, when the "still image" is designated, the pilot signal change-over control circuit 31 causes the switching circuit 17 to produce a reference signal S11 of one of the pairs of frequencies f1 and f2, f3 and f2, f3 and f4, or f1 and f4, as one of the first through fourth designation modes.

A smoothing circuit 32 comprising a low pass filter is interposed between the change-over switch circuit 25 and the DC amplifier 27.

When the "still" key of the separate operation switch is depressed and the contents of the still image mode designation signal S31 designate "still image", the tape drive mechanism temporarily stops tape drive. Thereafter, the tape drive mechanism slowly drives the tape, using the tracking error signal S3 from the error signal generator 3, to a position where the noise bars are generated in the vertical blanking period or in the vicinity thereof.

In this manner, the pilot signal change-over control circuit 31 causes the switching circuit 17 to supply a reference pilot signal S11 to the multiplier 14. The reference pilot signal S11 has frequencies f1 and f2 at the timings of the scanning periods W1 and W2 of the video heads A and B, as shown in Figures 9A1 and 9B1.

In this mode, if the tape 5 is at a position such that the head 6 scans across the third, fourth and first tracks T3, T4 and T1 as indicated by reference numerals 35 in Figure 10, the length of the scanning track of the head 6 opposing each of the tracks T3, T4 and T1 varies over time as indicated by a triangle 35a, a hexagon 35b, and a triangle 35c, respectively. Accordingly, in the reproduction output S1 obtained by one field scanning by the head 6 as shown in Figure 11C, the pilot signal component having a frequency f3 from the third track T3 decreases in with a triangle envelope. After this signal component reaches 0 level, another pilot signal component having a frequency f1 from the first track T1 increases in with a triangular envelope. Along with this change, a pilot signal component having a frequency f4 from the fourth track increases as the pilot signal component having the frequency f3 decreases, and then decreases as the pilot signal having the frequency f1 increases after the frequency f3 has reach 0 level. Thus, the pilot signal components change in a hexagonal form.

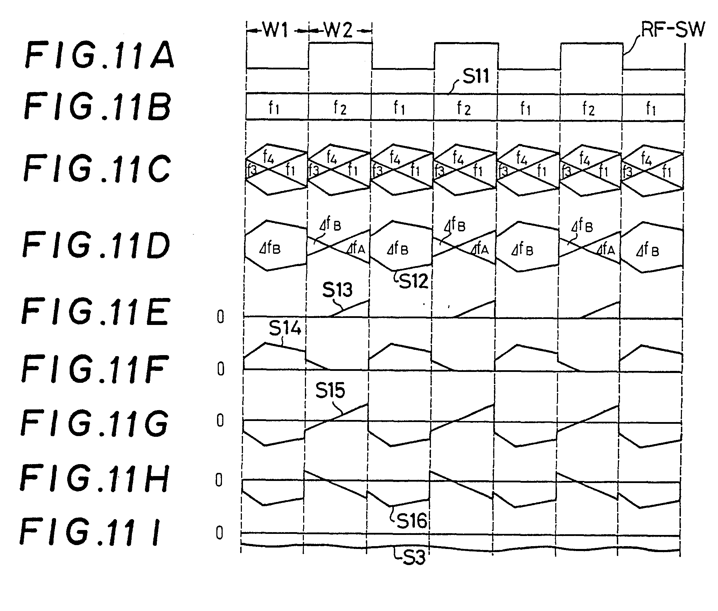

These changes in the reproduced output signal S1 and the signal components of the detected pilot signal S2 remain the same in the period W1 of the frequency f1 or the period W2 of the frequency f2. Thus, the difference frequencies $\Delta fA$ and $\Delta fB$ can be detected by the difference frequency detection circuits 20 and 21, as shown in Figure 11D. In the period W1, the signal component having the difference frequency $\Delta fB$ ($=f1-f4$) is included in the output S12 from the multiplier 14 based on the reproduced pilot signal component having the frequency f4. In the period W2, the signal components having the difference frequencies $\Delta fB$ and $\Delta fA$ are sequentially included in the output S12 from the multiplier 14 based on the reproduced pilot signal components having the frequencies f3 and f1. Accordingly, the amplitude detector circuit 22 at the side of the first difference frequency detecting circuit 20 produces the first error detection signal S13 which is similar to that obtained by peak detection of the signal component of the difference frequency $\Delta fA$ of the multiplication output S12, as shown in Figure 11E. Meanwhile, the amplitude detector circuit 23 at the side of the second difference frequency detecting circuit 21 produces the second error detection signal S14 which is similar to that obtained by peak detection of the signal component of the difference frequency $\Delta fB$ of the multiplication output S12, as shown in Figure 11F.

The first error detection signal S13 is supplied to the adding or positive input terminal of the subtracting circuit 24, while the second error detection signal S14 is supplied to the subtracting or negative input terminal of the subtracting circuit 14. Then, the subtracting circuit 24 produces at its output terminal a subtraction output S15 (Figure 11G) which is similar to that obtained by superposing the waveform shown in Figure 11F on that shown in Figure 11E. Then, the waveform portion in the period W2 is inverted by the inverter circuit 26. The change-over switch circuit 25 produces a positive DC level output S16 (Figure 11H).

As described with reference to Figure 5, the positive DC level output S16 from the change-over switch circuit 25 represents the tracking error amount to be corrected by the polarity and magnitude of the DC level. However, in the case shown in Figure 8, the level of the positive DC level output S16 significantly fluctuates. For this reason, the output S16 is produced as a tracking error signal S3 (Figure 11I) from which the fluctu-

ation component is removed by the smoothing circuit 32. In the example being described, the tracking error signal S3 has a negative DC level which indicates that the head 6 is displaced to the left from the normal tracking position.

Then, the tape drive mechanism slowly drives the tape 5 (Figure 10) to the left until the DC level of the tracking error signal S3 reaches 0 level. For this purpose. the tape can be driven slowly by the tape drive mechanism in one of the following ways. First, when the DC level of the tracking error signal S3 is negative, the mechanism drive the tape in the positive direction. Conversely, when the DC level of the tracking error signal S3 is positive, the mechanism drives the tape in the negative direction. Second, when the DC level of the tracking error signal S3 is not a 0 level, the tape is driven in a predetermined one direction (positive or negative), and then the tape is stopped after the DC level reach 0 level.

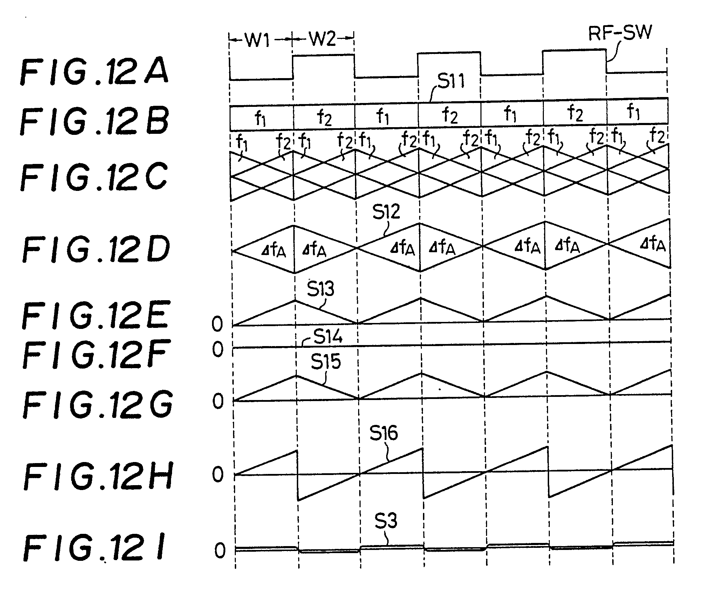

When the tape 5 is slowly driven in this manner, the scanning track of the head 6 is set such that the areas of the head 6 opposing the first and second tracks T1 and T2 are equal to each other as indicated by reference numeral 36 in Figure 10. Then, the lengths of the portion of the scanning track of the head 6 opposing the tracks T1 and T2, respectively, change in inverted triangular forms (Figure 12C) as time elapses as shown in Figures 12A to 12I in correspondence with Figures 11A to 11I. In the scanning period W1 in which the reference pilot signal S11 having the frequency f1 is produced from the switching circuit 17, the signal component of the difference frequency $\Delta fA$ ($=f1-f2$) between the reference pilot signal S11 having the frequency f1 and the reproduced pilot signal S2 having the frequency f2 is included in the multiplication output S12 from the multiplier 14. In the scanning period W2 in which the reference pilot signal S11 having the frequency f2 is produced from the switching circuit 17, the difference frequency $\Delta fA$ ($=f1-f2$) between the reference pilot signal S11 having the frequency f2 and the reproduced pilot signal S2 having the frequency f1 is included in the multiplication output S12 from the multiplier 14.

The subtracting circuit 24 receives as the first error detection signal S13 from the first difference frequency detection circuit 20 a triangular wave signal as shown in Figure 12E which is obtained by peak detection of the signal having the difference frequency $\Delta fA$. However, the second error detection signal S14 input to the subtracting circuit 24 from the second difference frequency detection circuit 21 remains at 0 level, as shown in Figure 12F. Then, a subtraction output S15 having a positive DC level equivalent to that of the signal S13 appears at the output terminal of the subtracting circuit 24, as shown in Figure 12G. The waveform portion corresponding to the period W2 is inverted by the change-over switch circuit 25, so that an AC output S16 which is inverted for each one-field scanning period W1 or W2 as shown in Figure 12H is obtained.

When the areas of the head 6 opposing the first and second tracks T1 and T2 are equal to each other, integrated values of the output S16 in the periods W1 and W2 have the same absolute values but have opposite polarities. Accordingly, the tracking error signal S3 appearing at the output terminal of the smoothing circuit 32 is maintained at substantially 0 level.

In this state, since the tracking error signal S3 is at 0 level, the tape drive mechanism stops the tape. Then, the head 6 reproduces the one-field video signal from the first track T1 by the head A in the scanning period W1 and then reproduces the one-field video signal from the second track T2 by the head B in the next scanning period W2, as has been described with reference to Figures 3 and 4. In this manner, the noise bars can be shifted to the change-over point or the vicinity of the level of the head change-over signal RF—SW, and hence to the vertical blanking period or the vicinity thereof. The noise bars can thus be displaced beyond the visible area of the screen (i.e. to the upper or lower side thereof).

In the above description, the head is stopped on the first and second tracks T1 and T2. However, if the frequency of the reference pilot signal S11 is alternately set at f3 and f4 as shown in Figures 9A3 and 9B3, the head 6 can be stopped on the third and fourth tracks T3 and T4 as indicated by reference numeral 37 shown in Figure 10. Similarly, if the reference pilot signal S11 is alternately set at frequencies f3 and f2 or f1 and f4 as shown in Figures 9A2 and 9B2, and in Figures 9A4 and 9B4, respectively, the head 6 can be stopped on the second and third tracks T2 and T3 or on the fourth and first tracks T4 and T1, respectively.

When the "frame advance key" is pressed by means of the separate operation switch and the contents of the still image mode designation signal S31 designate the "frame advance image" mode, the tape drive mechanism temporarily stops the tape and then commences the frame advance operation based on the tracking error signal S3, as will be described hereinafter.

First, the pilot signal change-over control circuit 31 controls the switching circuit 17 such that the switching circuit 17 sequentially supplies to the multiplier 14 a reference pilot signal S11 which alternately has frequencies f1 and f2 in the scanning periods W1 and W2, respectively, of the heads A and B, as shown in Figures 9A1 and 9B1. When the pilot signal change-over control circuit 31 controls in this manner, as in the case of the "still image" mode as described above, the head 6 stops on the first and second tracks T1 and T2. The head A scans the first track T1 and on the other hand the head B scans the second track T2, so that an image from which the noise bars have been displaced into the vertical blanking period can be obtained.

After a predetermined time has elapsed, the pilot signal change-over control circuit 31 then controls the switching circuit 17 such that the switching circuit 17 supplies to the multiplier 14 a reference pilot signal S11 (Figures 9A2 and 9B2) alternately having frequencies f3 and f4 in the scanning periods W1 and W2, respectively, of the heads A and B. Then, as in the case of the "still image" mode as described above, the head A scans the second track T2 while the head B scans the third track T3, so that an image from which the noise bars have been displaced into the vertical blanking period can be obtained.

In a similar manner, at predetermined time intervals, the pilot signal change-over control circuit 31 changes over the frequency of the reference pilot signal S11 in the order of f3 and f4, f1 and f4, f1 and f2, f3 and f2 and so on. Then, the tape is sequentially and intermittently driven so that the head is sequentially stopped on the tracks T3 and T4, T4 and T1, T1 and T2 T2 and T3 and so on. In this manner, frame advance images can be obtained in which the still images of the reproduced video signals are read out at predetermined intervals. Accordingly, the noise bars are eliminated from the reproduced images.

When the "reverse frame advance key" is pressed by means of a separate operation switch and the contents of the still image mode designation signal S31 designate the "reverse frame advance" mode, the pilot signal change-over control circuit 31 designates the frequency of the reference pilot signal S11 to be supplied from the switching circuit 17 in the opposite order to that of the "frame advance image" mode, that is, f1 and f2, f1 and f4, f3 and f4, f3 and f2, f1 and f2, and so on. At the same time, the tape drive mechanism reverses the driving direction of the tape from that in the "frame advance image" mode when the level of the tracking error signal S3 is other than 0. Then, in a similar manner to that for obtaining a still image, the tape is intermittently fed so that the head is stopped sequentially on corresponding tracks. A reproduced image free from noise bars can thus be obtained. Since the driving direction of the tape is opposite to that in the "frame advance image" mode, the reproduced image is a "reverse frame advance image".

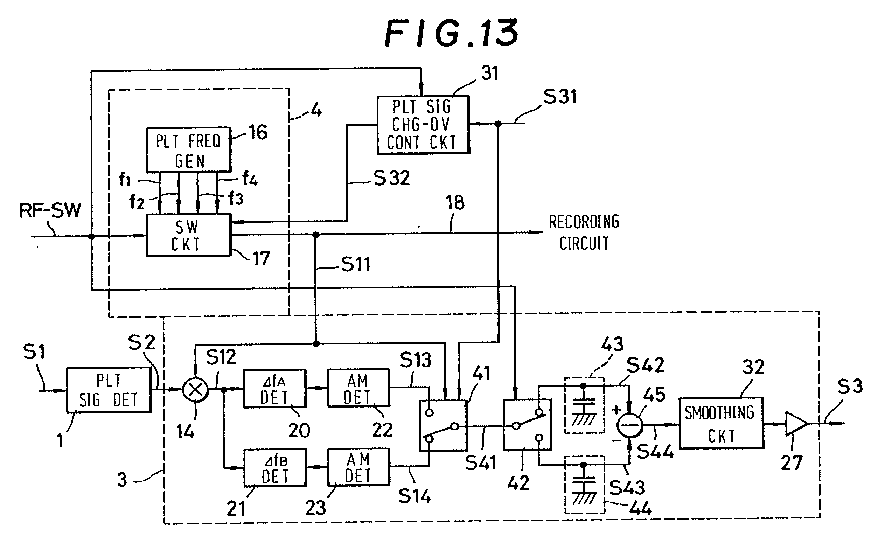

Figure 13 shows another embodiment of the present invention. The same reference numerals as used in Figure 8 denote the same parts. Outputs S13 and S14 from amplitude detector circuits 22 and 23 are coupled to a selector 41. A selection output S41 from the selector 41 is distributed to and stored in memories 43 and 44 through a distributor 42. Memory outputs S42 and S43 are supplied to adding and subtracting input terminals, respectively, of a subtracting circuit 45.

The selector 41 receives a still image mode designation signal S31 and a reference pilot signal S11 from a switching circuit 17. When the frequency of the reference pilot signal S11 is alternately set at f1 and f2 or f3 and f4 (Figures 9A1 and 9B1 or Figures 9A3 and 9B3), the selector 41 selects a DC level output S13 from the amplitude detector circuit 22 corresponding to the difference frequency $\Delta f_A$. When the frequency of the reference pilot signal S11 is alternately set at f3 and f2 or f1 and f4 (Figures 9A2 and 9B2 or Figures 9A4 and 9B4), the selector 41 selects a DC level output S14 from the amplitude detector circuit 23 corresponding to the difference frequency ΔfB. In each case, the selector 41 supplies the selected output S41 to the distributor 42.

In response to a head change-over signal RF—SW, in the head A scanning period W1, the distributor 42 distributes the output S41 from the selector 41 to the memory 43 at the adding input side of the subtracting circuit 45. In the head B scanning period W2, the distributor 42 supplies the output S41 from the selector 41 to the memory 44 at the subtracting input side of the subtracting circuit 45.

In this embodiment, the memories 43 and 44 comprise peak-holding capacitors and hold the peaks in the scanning periods W1 and W2, respectively.

In the embodiment shown in Figure 13, in the modes shown in Figures 9A1 and 9B1 or Figures 9A3 and 9B3, the selector 41 selects the output S13 corresponding to the difference frequency ΔfA and supplies it to the distributor 42. At this time, the signal component of the difference frequency ΔfA is obtained in a manner as described above with reference to Figures 11 and 12. The peak value of this signal component obtained during a scanning period W1 is stored in the memory 43. The peak value of the same signal component obtained during a scanning period W2 is stored in the memory 44. The signal components of the difference frequency ΔfA becomes equal to each other in the scanning periods W1 and W2 when the head 6 comes to a portion of the tape where the pilot signals having frequencies corresponding to those of the reference pilot signal S11 are stored as has been described with reference to Figure 12. When the head 6 opposes other portions of the tape, there is a difference between the signal components of the difference frequency ΔfA in the periods W1 and W2. Therefore, since there is a difference between the outputs S42 and S43 from the memories 43 and 44, a tracking error signal S3 is produced having a magnitude corresponding to the difference output S44 from the subtracting circuit 45.

Accordingly, the tape drive mechanism drives the tape until the tracking error signal S3 reaches 0 level. When the tracking error signal S3 reaches 0 level the state in which the signal components of the difference frequency ΔfA in the scanning periods W1 and S2 are equal to each other as in Figure 12 may be obtained. Thus, noise can be expelled into the vertical blanking period or the vicinity thereof and may not appear on the display screen.

In contrast to this, in the mode shown in Figures 9A2 and 9B2 or Figures 9A4 or 9B4, the selector 41 selects the signal component having the difference frequency ΔfB and supplies it to the distributor 42. In the same manner as described above, noise bars can be eliminated from the display screen.

In the embodiment having the configuration as shown in Figure 13, a display image in which the noise bars do not appear may be obtained in accordance with the signal components having the difference frequencies ΔfA and ΔfB in the scanning periods W1 and W2, respectively, of the heads A and B. For this purpose, the inverter circuit 26 in the embodiment shown in Figure 3 can be omitted in this embodiment.

In the description made with reference to Figure 13, the memories 43 and 44 comprise peak-holding capacitors. These memories may be replaced by a circuit which integrate the peak values of the signal component of the difference frequency ΔfA or ΔfB in the periods W1 and W2. As a further alternative the memories may sample the signal components at suitable timings and hold the sampled values.

When the "frame advance image" or "reverse frame advance image" mode is set in the embodiment shown in Figure 8 or 13, in the periods W1 and W2, the pilot signal change-over control circuit 31 sets the frequency of the reference pilot signal S11 in the first mode of f1 and f2, the second mode of f2 and f3, the third mode of f3 and f4, and the fourth mode of f1 and f4, so that the head 6 can stop on the tracks T1 and T2, T2 and T3, T3 and T4, and T4 and T1, respectively. However, the head 6 may also stop on the tracks T3 and T4, T4 and T1, T1 and T2, and T2 and T3. For example, consider a case wherein the frequency of the reference pilot signal S11 is alternately set at f1 and f2 (Figure 12B) as described with reference to Figure 12. When the head opposes the tracks T3 and T4 in this state, the state is established in which the frequency f1 is replaced by f3 and the frequency f2 is replaced by f4 with reference to Figure 12C. Accordingly, in the scanning intervals W1 and W2 the signal components of the difference frequency ΔfB (=f1−f4=f2−f3) are obtained at the output terminal of the subtracting circuit 14, and the tracking error signal S3 reaches 0 level in this case.

In the designation of the frequency of the reference pilot signal S11 alternates between two modes and the driving direction of the tape drive mechanism of the tape is predetermined in one direction, intermittent driving of the tape can be achieved. In this case, the frequency of the reference pilot signal S11 is set to alternate between the first mode (Figures 9A1 and 9B1) and the second mode (Figures 9A2 and 9B2), between second mode and the third mode (Figures 9A3 and 9B3), between the third mode and fourth mode (Figures 9A4 and 9B4), or between fourth mode and the first mode.

When this measure is taken, the switching function and the configuration of the pilot signal change-over circuit 31 can be simplified.

In the embodiments described above, the error signal generator 3 constituting and ATF loop is directly utilised so as to obtain a tape drive signal (as a tracking error signal) for eliminating the noise bars from the screen. However, a similar effect may be obtained by incorporating a dedicated tape drive signal generator of the same configuration as that of the error signal generator 3 whether or not the apparatus is also provided with a separate ATF system.

In summary, according to the present invention, frequency of the reference pilot signals is set properly for reproducing a still image so as to drive a tape such that noise bars are eliminated from the display screen. Accordingly, the image quality of a still image in a video recording apparatus having an ATF system can be improved.

It will be appreciated that the invention is not limited in its application to video tapes having images recorded in oblique tracks but is equally applicable to other types of record media and recording formats where cross talk between adjacent track portions may cause noise bars.

## Claims

1. An apparatus for reproducing a still picture signal by scanning with reproducing heads on video tape on which recorded tracks (T1—T4) are sequentially formed, wherein each of the recorded tracks contains a pilot signal, the frequencies (f1—f4) of the respective pilot signals sequentially changing from track to track in a predetermined cyclic order, the apparatus comprising means (4) for generating reference pilot signals having frequencies corresponding to the frequencies of said pilot signal to be reproduced from said recorded tracks, means (3) for generating a control signal indicative of positions of said tape relative to said reproducing heads by subtracting the frequency of a reference pilot signal from the frequency of the pilot signal reproduced by said reproducing heads, and means for controlling the position of said tape relative to said heads in response to said control signal, characterised in that for use in a mode of operation in which the heads scan across two adjacent tracks to reproduce a still-picture signal, said reference pilot signal generating means (4) is adapted to supply to said control signal generating means (3) a reference pilot signal whose frequency alternates for successive scans between first and second frequencies which are the same as respective ones of the pilot signals in the adjacent tracks being scanned, the frequency being changed between scans and held contant for the duration of each scan, in order to search for a proper tape position for still image reproduction.

2. An apparatus according to claim 1, and comprising a pair of such reproducing heads (A, B), the heads of the pair having different azimuth angles to each other and which alternately scan said adjacent tracks and wherein a switching signal (RF—SW) for switching outputs of said pair of heads is supplied to said reference pilot signal generating means (4) to change the frequencies of the reference pilot signal pair which it produces.

3. An apparatus according to claim 2, wherein the frequencies of said reference pilot signal pair change at predetermined intervals, whereby said tape position control means intermittently changes the tape position to a position in which the frequencies of the pilot signals recorded in the scanned tracks correspond to the frequencies of said reference pilot signal pair.

4. A still image reproducing apparatus according to any one of the preceding claims, wherein the control signal generating means (3) comprises means (14) for multiplying the reference pilot signal with the reproduced pilot signals and means (20—27, 32) for producing a drive signal to be supplied to said tape position control means in accordance with the obtained multiplication result, such that each reproducing head overlies a pair of tracks on which the pilot signals having the frequencies equal to the pair of frequencies of the reference pilot signal are recorded.

## Patentansprüche

1. Gerät zum Wiedergeben eines Standbildsignals durch Abtasten eines Videobandes, auf dem Spuren (T1—T4) aufeinanderfolgend ausgebildet sind, mit Wiedergabe-Köpfen, wobei jede der aufgezeichneten Spuren ein Pilotsignal enthält und wobei sich die Frequenzen (f1—f4) der betreffenden Pilotsignale sequentiell von Spur zu Spur in einer vorbestimmten zyklischen Reihenfolge ändern, welches Gerät ein Mittel (4) zum Erzeugen von Referenz-Pilotsignalen, die Frequenzen entsprechend den Frequenzen des Pilotsignals haben, das aus den aufgezeichneten Spuren wiederzugeben ist, ein Mittel (3) zum Erzeugen eines Steuersignals, das bezeichnend für Positionen des Bandes relativ zu den Wiedergabe-Köpfen ist, durch Subtrahieren der Frequenz eines Referenz-Pilotsignals von der Frequenz des Pilotsignals, das durch die Wiedergabe-Köpfe wiedergegeben ist, und Mittel zum Steuern der Position des Bandes relativ zu den Köpfen in Reaktion auf das Steuersignal enthält, dadurch gekennzeichnet, daß das Referenz-Pilotsignal-Erzeugungsmittel (4) zur Benutzung in einer Betriebsart, in der die Köpfe zwei benachbarte Spuren überstreichen, um ein Standbild zu erzeugen, dazu bestimmt ist, dem Steuersignal-Erzeugungsmittel (3) ein Referenz-Pilotsignal zuzuführen, dessen Frequenz sich für aufeinanderfolgende Abtastungen zwischen ersten und zweiten Frequenzen ändert, die dieselben wie die betreffenden Frequenzen der Pilotsignale in den abgetasteten benachbarten Spuren sind, wobei die Frequenz zwischen Abtastungen geändert wird und während der Dauer jeder Abtastung konstant gehalten wird, um nach einer geeigneten Bandposition für die Standbildwiedergabe suchen zu können.

2. Gerät nach Anspruch 1, mit einem Paar solcher Wiedergabe-Köpfe (A, B), wobei die Köpfe des Paares unterschiedliche Azimutwinkel haben und abwechselnd die benachbarten Spuren abtasten und wobei dem Referenz-Pilotsignal-Erzeugungsmittel (4) ein Schaltsignal (RF—SW) zum Schalten der Ausgangssignale des Paares von Köpfen zugeführt wird, um die Frequenzen des von ihm erzeugten Referenz-Pilotsignalpaares zu ändern.

3. Gerät nach Anspruch 2, bei dem sich die Frequenzen des Referenz-Pilotsignalpaares bei vorbestimmten Intervallen ändern, wodurch das Bandpositions-Steuermittel die Bandposition intermittierend zu einer Position hin ändert, in der die Frequenzen der Pilotsignale, die in den abgetasteten Spuren aufgezeichnet sind, den Frequenzen des Referenz-Pilotsignalpaares entsprechen.

4. Gerät zum Wiedergeben eines Standbildes, nach einem der vorhergehenden Ansprüche, bei dem das Steuersignal-Erzeugungsmittel (3) ein Mittel (14) zum Multiplizieren des Referenz-Pilotsignals mit den wiedergegebenen Pilotsignalen und Mittel (20—27, 32) zum Erzeugen eines Treibersignals enthält, das dem Bandpositions-Steuermittel in Übereinstimmung mit dem gewonnenen Multiplikationsergebnis zuzuführen ist, so daß jeder Wiedergabe-Kopf über einem Paar von Spuren liegt, in denen die Pilotsignale, die Frequenzen gleich dem Paar von Frequenzen des Referenz-Pilotsignals haben, aufgezeichnet sind.

**Revendications**

1. Dispositif pour reproduire un signal d'image fixe par balayage au moyen de têtes de reproduction sur une bande vidéo sur laquelle sont formées séquentiellement des pistes enregistrées (T1—T4), dans lequel chacune des pistes enregistrées contient un signal pilote, les fréquences (f1—f4) des signaux pilotes respectifs changeant séquentiellement d'une piste à une autre piste dans un ordre cyclique prédéterminé, le dispositif comprenant un moyen (4) pour engendrer des signaux pilotes de référence ayant des fréquences correspondant aux fréquences du signal pilote à reproduire à partir des pistes enregistrées, un moyen (3) pour engendrer un signal de contrôle indicatif des positions de la bande par rapport aux têtes de reproduction en soustrayant la fréquence d'un signal pilote de référence de la fréquence du signal pilote reproduit par les têtes de reproduction, et un moyen pour contrôler la position de la bande par rapport aux têtes en réponse au signal de contrôle, caractérisé en ce que, pour une utilisation dans un mode de fonctionnement où les têtes font un balayage à travers deux pistes voisines pour reproduire un signal d'image fixe, le moyen générateur de signaux pilotes de référence (4) est agencé pour fournir au moyen générateur de signal de contrôle (3) un signal pilote de référence dont la fréquence alterne pour des balayages successifs entre des première et deuxième fréquences qui sont les mêmes que les fréquences respectives des signaux pilotes dans les pistes voisines balayées, la fréquence étant changée entre les balayages et maintenue constante pendant la durée de chaque balayage, afin de chercher une position convenable de bande pour une reproduction d'image fixe.

2. Dispositif selon la revendication 1, et comprenant une paire de ces têtes de reproduction (A, B), les têtes de la paire ayant différents angles d'azimuth l'une par rapport à l'autre et celles-ci faisant un balayage alternativement des pistes voisines et dans lequel un signal de commutation (RF—SW) pour commuter les sorties de la paire de têtes est fourni au moyen générateur de signaux pilotes de référence (4) pour changer les fréquences de la paire de signaux pilotes de référence qu'il produit.

3. Dispositif selon la revendication 2, dans lequel les fréquences de la paire de signaux pilotes de référence varient à intervalles prédéterminés, le moyen de contrôle de position de bande changeant de la sorte de façon intermittente la position de bande en une position où les fréquences des signaux pilotes enregistrés dans les pistes balayées correspondant aux fréquences de la paire de signaux pilotes de référence

4. Dispositif de reproduction d'image fixe selon l'une quelconque des revendications 1 à 3, dans lequel le moyen générateur de signal de contrôle (3) comprend un moyen (14) pour multiplier le signal pilote de référence avec les signaux pilotes reproduits et un moyen (20—27, 32) pour produire un signal d'entraînement à fournir au moyen de contrôle de position de bande selon le résultat de multiplication obtenu, de telle sorte que chaque tête de reproduction recouvre une paire de pistes sur lesquelles les signaux pilotes ayant les fréquences égales à la paire de fréquences du signal pilote de référence sont enregistrés.

FIG.1

FIG.2A

FIG.2B

FIG.2C

FIG.3

FIG.4A

FIG.4B

FIG.4C

EP 0 102 826 B1

# FIG.5

# FIG.6

2

FIG.7A

FIG.7B

FIG.7C1

FIG.7C2

FIG.7D1

FIG.7D2

FIG.7E

FIG.7F

FIG.7G

FIG.7H

FIG.8

4

FIG.9A1
FIG.9B1

| | W1 | W2 | | | RF-SW | | |
|---|---|---|---|---|---|---|---|
| | A | B | A | B | A | B |
| | f1 | f2 | f1 | f2 | f1 | f2 |

FIG.9A2
FIG.9B2

RF-SW S11

| A | B | A | B | A | B |
|---|---|---|---|---|---|
| f3 | f2 | f3 | f2 | f3 | f2 |

FIG.9A3
FIG.9B3

RF-SW S11

| A | B | A | B | A | B |
|---|---|---|---|---|---|
| f3 | f4 | f3 | f4 | f3 | f4 |

RF-SW S11

FIG.9A4
FIG.9B4

| A | B | A | B | A | B |
|---|---|---|---|---|---|
| f1 | f4 | f1 | f4 | f1 | f4 |

S11

FIG.10

35c

T4 T1 T2 T3 T4 T1 T2 T3 T4 T1 T2     5

f4 f1 f2 f3 f4 f1 f2 f3 f4 f1 f2

35a 35b 35 36 37

5

FIG.11A

FIG.11B

FIG.11C

FIG.11D

FIG.11E

FIG.11F

FIG.11G

FIG.11H

FIG.11 I

FIG.12A

FIG.12B

FIG.12C

FIG.12D

FIG.12E

FIG.12F

FIG.12G

FIG.12H

FIG.12I

*FIG.13*